# EUROPEAN PATENT SPECIFICATION

(11) **EP 1 553 765 B1**
(45) Date of publication and mention of the grant of the patent: **17.08.2011**
(21) Application number: 05000087.6
(22) Date of filing: 04.01.2005
(51) Int. Cl.: H04N 5/445

(54) **Digital television broadcast receiver and reception method**
Digitaler Fernsehempfänger und -empfangsverfahren
Récepteur et procédé de réception de télévision numérique

(30) Priority: 08.01.2004 JP 2004002954
(43) Date of publication of application: 13.07.2005
(73) Proprietor: CASIO COMPUTER CO., LTD., Shibuya-ku, Tokyo 151-8543 (JP)
(72) Inventor: Futawatari, Shigeru c/o Casio Computer Co., Ltd., Hamura-shi Tokyo 205-8555 (JP)
(74) Representative: Grünecker, Kinkeldey, Stockmair & Schwanhäusser Anwaltssozietät

(56) References cited:
- WO-A-01/74065
- WO-A-01/84831
- WO-A-02/077960
- WO-A1-00/44168
- WO-A2-02/51151
- US-A1- 2001 001 160
- US-A1- 2002 129 367

## Description

The present invention relates to digital television broadcast receivers that receive digital television broadcasts and reproduce their images and voices.

In recent television broadcasts, digital broadcasts that transmit digital signals via CSs (Communications Satellites) and BSs (Broadcast Satellites) and ground-wave digital broadcasts have been developed instead of the ground-wave analog broadcasts.

In the digital television broadcast, data can be multiplexed by MPEG (Moving Picture Experts Group) compression encoding technique and a multiorganization broadcast has been realized that transmits images and voices of a plurality of TV programs in the same radio-wave band as used in the prior-art analog broadcast. In addition to the images and voices of the TV program, a data broadcast has been realized, transmitting an electrical program guide (EPG) for TV programs and other various types of service information such as weather forecast information, news information and baseball/soccer game progress information.

The digital broadcast receiver reproduces broadcast images and voices based on a multiorganization broadcast signal received from a broadcast station and displays the content of a data broadcast (or various types of service information) included in the broadcast signal in accordance with the user's instructions. The images and service information are displayed in a predetermined display format prepared by the digital broadcast receiver. In addition, a system that downloads a display format of a design depending on the user's preference from the broadcast station is disclosed in Unexamined Published Japanese Patent Application 2001-298670.

In these display methods, all of service information included in the received data broadcast are displayed in the display format on the same picture of the display screen. Thus, even when the user wants to know only the weather forecast, he or she is forced to view even information that are uninteresting to the user such as, for example, stock information and baseball progress information. Accordingly, the display area of the TV program images is reduced. Thus, with a small display, not only the video but also characters of the service information will be difficult to view.

US Patent application 2002-0129367A describes a system for collecting content from various information sources such as TV broadcasts and displaying the collected information in accordance with a user selected format. Reference WO-A-01/84831 describes a system for accessing services in a cable TV system based on html-menus. In particular, these menus may be configured by the user in an interactive fashion.

Reference WO-A-02/077960 describes an interactive TV system capable of displaying an electronic program guide wherein the format of the electronic program guide can be customized by the user. This TV system also comprises a storage device to store user preferences. From reference WO-A-01/74065 a method for displaying an electronic program guide is known, wherein the display format can be adapted to the resolution or aspect ratio of the display. The display format may also be selected based on user input.

A method of enabling a television viewer to interact with a television programme is known from WO2002/051151 A television signal corresponding to said television programme is broadcast by a television corporation whilst an information server is synchronised to the broadcast. Messages are sent from the information server to a mobile wireless terminal operated by the television viewer and/or received at the information server from wireless terminal. The sending and/or receipt of messages at the information server is synchronised with the broadcast television signal.

Reference US 2001/0001160 relates to an interactive entertainment system, wherein a broadcast signal also comprises a data broadcast indicating a target resource with supplemental content, which may be downloaded from a server and displayed together with the video information in accordance with certain display layout instructions. In this case, however, the supplemental content and the display layout instructions have to be derived from the same source, namely the enhanced content server.

From WO 00/44168 it is known that a television broadcast may be transmitted with an additional signal indicative of additional information being available on an Internet site. At a receiver station, a control box is provided which is associated with a standard telephone set. The telephone set provides standard telephone communication for a user or alternatively can be used to control access to the Internet site with the additional information and to retrieve said information for display on a standard TV set together with the standard program. The telephone set is provided with additional keys with which this control can be achieved.

In any of the above cited prior art references, the user is required to perform a complex series of operations in order to adjust the desired display format. It is thus an object of the present invention to provide an improved digital broadcast receiving system and a corresponding method for displaying service information in a display format meeting the user's preferences.

This is achieved by the features of the independent claims. Preferred embodiments are the subject matter of dependent claims.

The accompanying drawings, which are incorporated in and constitute a part of the specification, illustrate presently preferred embodiments of the present invention and, together with the general description given above and the detailed description of the preferred embodiments given below, serve to explain the principles of the present invention in which:
FIG. 1 illustrates a television receiver body and a remote controller of a broadcast receiver as a first embodiment of the present invention;
FIG. 2 illustrates the internal composition of the television receiver body;
FIG. 3 illustrates a data composition of a format table;
FIG. 4 is a flowchart of a data display process to be executed by the broadcast receiver;
FIGS. 5A-5D illustrate a transition of a select picture on which items of items of service information to be displayed are selected;
FIG. 6 illustrates the composition of a broadcast system as a second embodiment of the present invention;
FIG. 7 illustrates a plurality of combinations of display format data and items of items of service information provided by a server; and
FIG. 8 is a flowchart of a process to be executed by a mobile communication terminal.

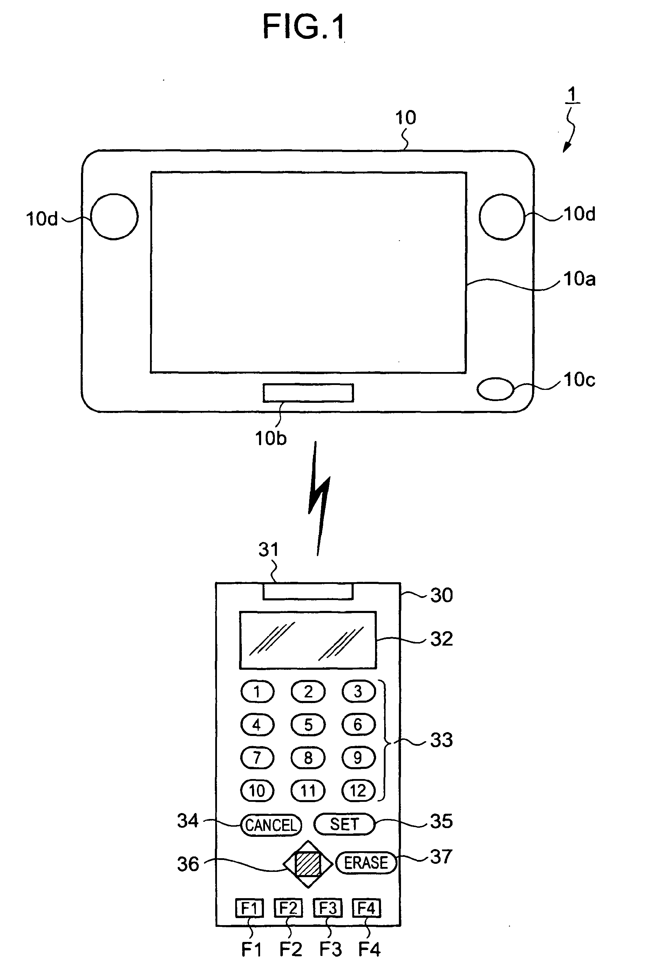

FIG. 1 illustrates the external appearance of a digital television broadcast receiver 1 as the first embodiment of the present invention.

The receiver 1 comprises a receiver body 10 and a remote controller 30. The receiver body 10 receives a broadcast signal sent from a broadcast station and reproduces a video and voices based on the broadcast signal. Data that will be transmitted by the broadcast signal comprises video data and voice data of the television program, and various types of service information of a data broadcast included. The service information refers to EPG information, URL information of a web page on the broadcast program, weather forecast information, news information, digest information on baseball games, etc.

The receiver body 10 has on its front a display device 10a, a remote controller signal reception unit 10b that receives an operation signal transmitted from the remote controller 30, a power supply on/off key 10c and a pair of speakers 10d.

The remote controller 30 is used to operate the receiver 10 and comprises a remote control signal transmission unit 31 that transmits an operation signal to the television body 10, a display 32, a channel key unit 33 that specifies a channel to be viewed, a cancel key 34 that cancels an operation command issued, a set key 35 that selects a set mode, a cursor key unit 36 that moves a cursor pointer right and left and up and down on the displayed picture, an erase key 37 that gives a command to erase data, and function keys F1-F4 that specify respective display formats in each of which the items of service information are displayed. The remote controller 30 sends a key operated signal corresponding to the depressed key to the television receiver body 10 in infrared communication.

The user is able to select items of service information to be displayed with the keys 34, 35-37 of the remote controller 30.

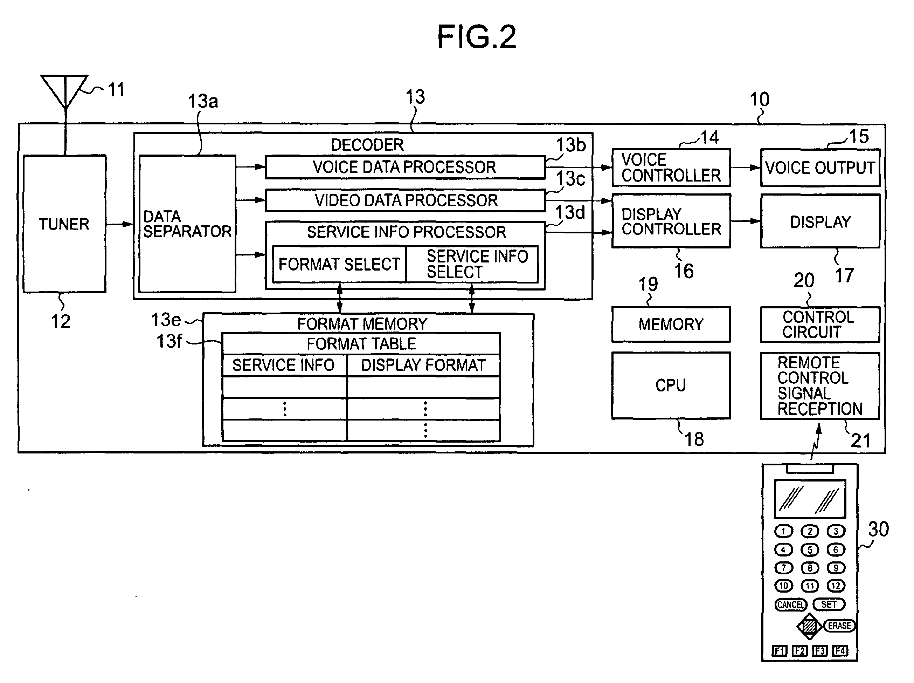

FIG. 2 illustrates the internal composition of the receiver body 10, which comprises an antenna 11, a tuner 12, a decoder 13, a voice controller 14, a voice output unit 15, a display controller 16, a display unit 17, a CPU 18, a memory 19, a control circuit 20, and a remote controller signal reception unit 21.

The antenna 11 receives broadcast signals transmitted from broadcast stations and outputs the received broadcast signals to the tuner 12.

The tuner 12 comprises filters, an amplifier, an oscillator, a PLL circuit, a mixer, etc. It selects a specified channel broadcast signal from among the received broadcast signals, and outputs it to the decoder 13.

When broadcast signals are inputted to the tuner 12, a selected filter extracts only a corresponding frequency band signal and the amplifier amplifies the extracted broadcast signal. The amplified signal is inputted to the mixer. The oscillator generates a predetermined frequency signal based on a synchronizing signal corresponding to a specified channel received from the PLL circuit and then inputs it to the mixer. The mixer converts the broadcast signal received from the amplifier to an intermediate frequency signal in accordance with the oscillation signal from the oscillator, and the intermediate frequency signal is then inputted to the decoder 13.

The decoder 13 demodulates the intermediate frequency signal from the tuner 12, thereby providing video, voice and service information signals. The decoder 13 comprises a data separator 13a, a voice data processor 13b, a video data processor 13c, a service information processor 13d and a format memory 13e.

The data separator 13a demodulates the intermediate frequency signal from the tuner 12 in an OFDM (Orthogonal Frequency Division Multiplexing) system, and more particularly, in a selected one of DQPSK (Differential Quadrature Phase Shift Keying), QPSK (Quadrature Phase Shift Keying), 16QAM (Quadrature Amplitude Modulation) and 64QAM systems. The data separator 13a then separates the resulting signal into the voice signal, video signal, and service information (data broadcast) signal, which are then delivered to the voice data processor 13b, video data processor 13c and service information processor 13d, respectively.

The voice data processor 13b decodes the received voice signal in the MPEG-2 system, thereby producing voice data, processes the voice data in required manners, and outputs a resulting signal to the voice controller 14.

The video data processor 13c decodes the received video signal in the MPEG-2 system, thereby producing video (moving image) data, processes the video data in required manners, and then outputs resulting video data to the display controller 16.

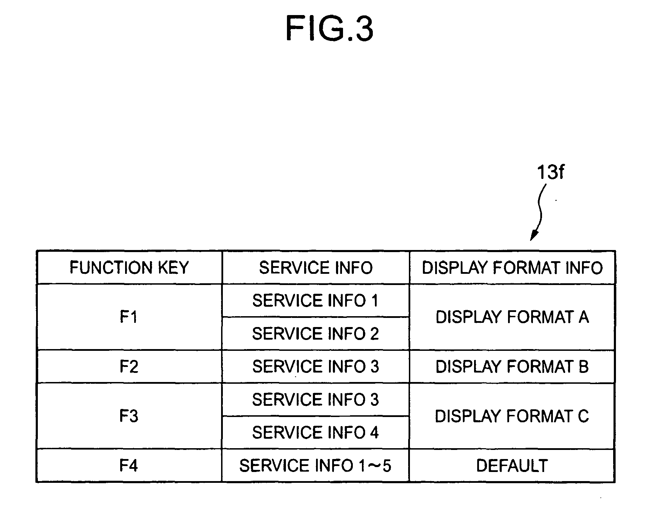

The service information processor 13d decodes the received service information signal in the MPEG-2 system, thereby producing various types of service information. As shown in FIG. 3, the format memory 13e comprises a format table 13f on which each of combinations of various items of service information to be displayed and display format data comprising the positions and sizes where the respective service information are displayed, is stored in correspondence to a respective one of the function keys F1-F4 provided in the remote controller 30. In FIG. 3, items of service information 1 and 2 and a display format A therefor are stored in correspondence to the function key F1; an item of service information 3 and a display format B therefor to the function key F2; items of service information 3 and 4 and a display format C therefor to the function key F3; and items of service information 1-5 and a default display format therefor to the function key F4. The respective items of service information 1, 2, 3, 4 and 5 represent, for example, weather forecast, stock price prompt report, news flash, soccer game progress prompt report, and traffic information, respectively. The service information processor 13d also determines a display format and items of service information to be displayed in that display format, specified by any particular one of the function keys F1-F4, and outputs these information to the display controller 16 for displaying purposes.

The voice controller 14 controls the operation of the voice output unit 15 in which it converts the voice data received from the voice data processor 13b to an analog voice signal in a D/A converter (not shown) thereof, and outputs the analog voice signal to the voice output unit 15, which lets off a corresponding sound from the pair of speakers 10d of FIG. 1.

The display controller 16 controls the operation of the display unit 17. More particularly, it combines video data received from the video data processor 13c and service data received from the service information processor 13d in accordance with display format data received from the service information processor 13d and outputs the resulting data to the display unit 17 for displaying purposes.

The display unit 17 comprises the display device 10a of FIG. 1, and displays a composite form of the video and items of service information received from the display controller 16.

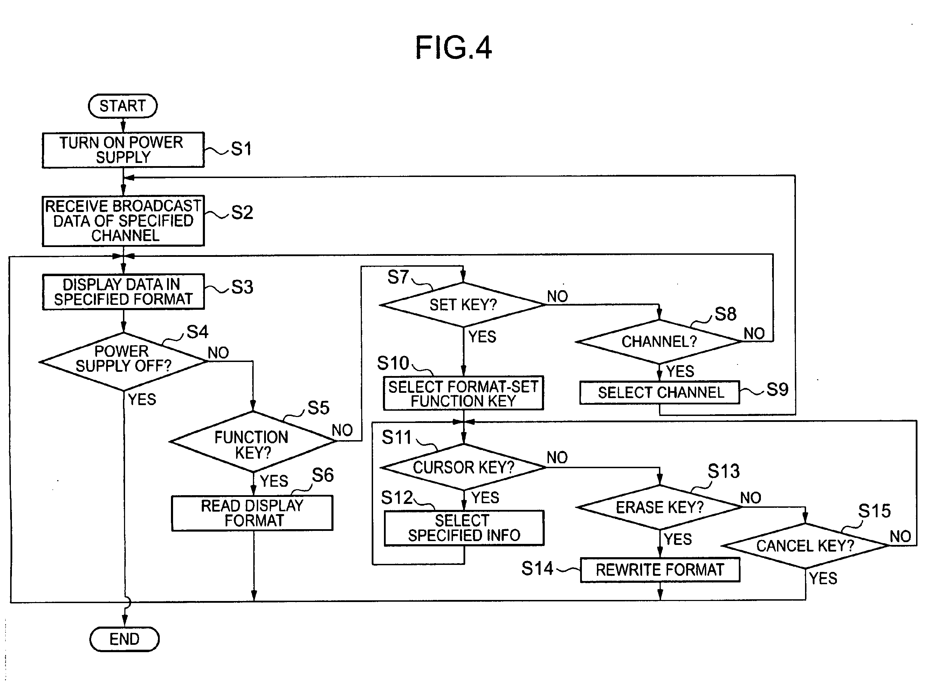

CPU 18 controls the respective components of the television receiver body 10 systematically in accordance with the respective programs stored in the memory 19. Especially, CPU 18 reads out a data display program from the memory 19 and controls the data display process (FIG. 4) systematically in cooperation with the program. The data display process controls reproduction of videos and voices broadcasted in the channel specified by the channel key unit 33 of the remote controller 30. When the receiver body 10 is commanded by the remote controller 30 to display and set items of service information included in the data broadcast, and the ones to be displayed are selected by the remote controller 50 from among all the items of service information received from the broadcast station, the display positions and sizes of the selected items of service information are adjusted, thereby producing a new display format, whose data is then stored along with the selected items of service information on the format table 13f of the format memory 13e in correspondence to the associated one of the function keys F1-F4.

The memory 19 has stored the respective control programs including the data display program and also stores data processed in accordance with the respective programs.

The control circuit 20 controls communications by the remote controller signal reception unit 21 via which an operation signal received from the remote controller 30 is decoded and outputted to CPU 18.

The remote controller signal reception unit 21 performs infrared communication with the remote controller signal transmission unit 31, thereby receiving an operation signal from the remote controller 30 and outputs it to the control circuit 20.

Then, operation of the television receiver body 10 will be described with respect to a flowchart of FIG. 4. First, the power supply on/off key 10c of the television receiver body 10 is turned on (step S1).

Then, when any particular channel key of the channel key unit 33 is depressed in the remote controller 30, the receiver body 10 extracts a broadcast signal corresponding to the channel specified by the channel key from among the broadcast signals received via the antenna 11, thereby providing voice, video and a plurality of service information from the extracted broadcast signal (step S2).

Then, the voice output unit 15 outputs the voice data from the pair of speakers 10d audibly, and the display unit 17 displays the video and a plurality of service information, thereby displaying a corresponding television program and data broadcast (step S3). Immediately after the power supply on/off key 10c is turned on, no items of service information to be displayed are especially specified. Thus, all of service information included in the received data broadcast are displayed in a default display format.

In this state, the television receiver body 10 monitors whether the power supply on/off key 10c is turned off, or any one of the function keys F1-F4, set key 35 or any key of the channel key unit 33 of the remote controller 30 has been operated (steps S4, S5, S7, S8).

When the power supply on/off key 10c is turned off (YES in step S4), the process is terminated.

When any particular one of the function keys F1-F4 is operated in the remote controller 30 (YES in step S5), a corresponding display format information and associated items of service information are read out from the format table 13f (step S6). The control then returns to step S3 where the video and service information are redisplayed in the read display format.

When any particular key of the channel key unit 33 is operated, thereby commanding the receiver body 10 to select a corresponding channel (YES in step S8), this channel is selected (step S9). Then, the control returns to step S2 where a broadcast signal corresponding to the selected channel is extracted at the tuner 12 instead of the broadcast signal selected so far.

When the set key 35 is operated in the program display state (YES in step S7), the control goes to step S10, thereby performing a display format setting process. In this process, the setting picture is displayed, thereby prompting the user to select one of the function keys F1-F4 and set an associated display format. When the user selects one of the function keys, a select picture to select items of service information to be displayed next is displayed. The following explanation will be given on assumption that the function key F4 is selected, but a similar setting process will be made even when another associated one of the function keys F1-F3 is selected.

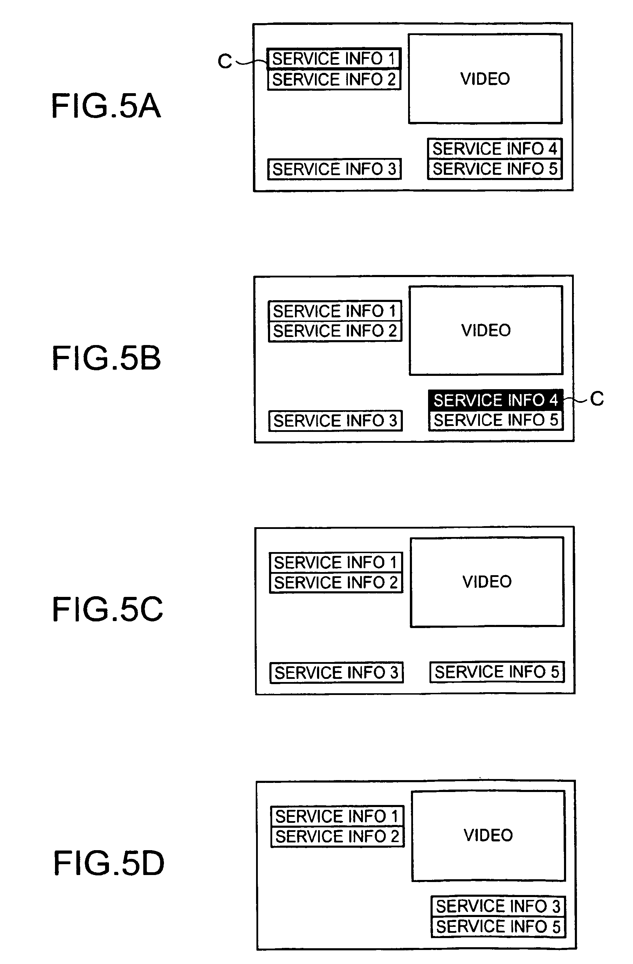

When the F4 function key is operated, a select picture on which all the items of service information included in the data broadcast are displayed around a video in a default display format, as shown in FIG. 5A. In this select picture, the cursor indicator C that specifies a particular item of service information is displayed and the item of service information specified by the cursor indicator C is displayed in an emphasized manner, for example in half-tone dot mesh, for discriminating purposes. The user can move the cursor indicator C to specify an item of service information to be erased. That is, the control determines whether the cursor key 36 of the remote controller 30 has been operated (step S11). If so, the cursor indicator C moves on the select picture to an item of service information determined in accordance with the operation of the cursor key 36 (step S12). For example, the cursor key 36 is depressed three times in a state where the cursor indicator C is at the item of service information 1, the cursor indicator C moves up to the item of service information 4, as shown in FIG. 5B. The cursor indicator C circulates through the displayed items of service information 1-5 by one item of service information each time the cursor key is operated. Each time the cursor indicator C moves to any particular item of service information, the control returns to step S11.

When the erase key 37 is operated in a state where any item of service information is specified by the cursor indicator C (YES at step S13), the item of service information 4 specified by the cursor indicator C is erased from the picture and the specified item of service information displayed in correspondence to the selected function key F4 is erased from the format table 13F, as shown in FIG. 5C.

In response to this erasure of the item of service information, the display positions and sizes of the remaining items of service information 1-3 and 5 are adjusted such that a corresponding new display format is created, as shown in FIG. 5D. Data on the new created display format replaces data on the old one set in correspondence to the function key F4 on the format table 13f (step S14). The control then returns to step S3 where the video and the new set of service information are displayed in accordance with the new display format data. As described above, a display format is created and set for each combination of different items of service information in correspondence to a respective one of the function keys F1-F4.

When the cancel key 34 is depressed (YES in step S15), the display format setting process is cancelled and then the control returns to step S3.

As will be obvious from the above, according to the present invention, when, for example, the father, mother and two children of a family share the digital broadcast receiver 1 in their home, they can individually set optimal display formats in each of which desired service information for a respective one of the family members are selected and displayed.

A display format and items of service information to be displayed in the display format are set for each of the function keys F1-F4 of the remote controller 30. Thus, when service information are displayed, a display format optimal for displaying only the items of service information to be displayed can be easily selected. For example, when the family shares the digital broadcast receiver 1, the function keys F1, F2, F3 and F4 can be allocated to the father, mother and two children, respectively, such that the members of the family may set and select their respective optimal display formats easily.

The present invention is not limited to the embodiment of the broadcast receiver 1. While in the aforementioned description it is illustrated that the user can erase unnecessary items of service information to select new desired items of service information to be displayed, the arrangement may be such that the items of service information to be displayed can be directly inputted and set. While it is illustrated that the unnecessary items of service information specified by the user are erased from the picture and the display positions of the remaining items of service information are automatically adjusted in the broadcast receiver 1, the display positions and sizes of the respective video data and items of service information may be changed manually by the remote controller 30 so as to create a new display format freely.

While in the aforementioned description each of the plurality of function keys is allocated a display format and a plurality of items of service information to be displayed, each of the channel keys may undertake the same task. Alternatively, a changeover key for a display format may be provided such that each time the changeover key is operated, a different one of a plurality of preset different display formats is selected.

While it is illustrated that each of the keys of the remote controller 30 selects a display format and its items of service information to be displayed, each of keys provided on the television receiver body 10 may be operated instead for the same purpose.

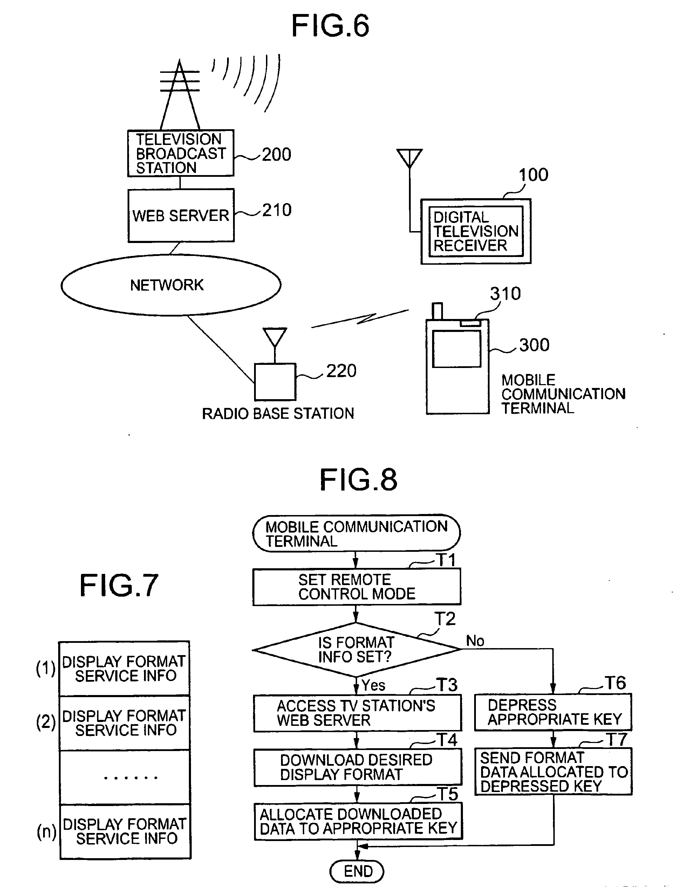

FIG. 6 illustrates the composition of a control system of a digital television broadcast receiver as a second embodiment of the present invention.

The receiver 100 has the same function as the television receiver body 10 of the first embodiment. More particularly, the receiver 100 receives broadcast radio waves from a television broadcast station 200, and displays various television program videos and various types of service information included in the data broadcast. The receiver 100 receives an infrared signal from a mobile communication terminal 300 and stores a new display format included in the infrared signal in a built-in format memory thereof.

As shown in FIG. 7, a web server 210 has stored data on a plurality of combinations of a display format and items of service information to be displayed in the display format based on the content of the data broadcast given by the television broadcast station. It is assumed that there are, for example, five different items of service information and that a first combination (1) comprises a display format and two items of service information 1 and 2 that will be displayed in the display format in a small size in an lower part of the displayed picture, a second combination (2) comprises a display format and three items of service information 2, 3 and 5 that will be displayed in a medium size in an upper part of the displayed picture, etc. The web server 210 permits the accessing terminal 300 to browse and download the information stored therein.

The mobile communication terminal 300 has the functions of telephone and data communication. It also has an infrared transmission port 310 and the function of operating the television receiver by remote control. It is also capable of accessing the web server 210 via a radio base station 220 to receive data, using the data communication function thereof.

In this system, the user is able to change the mode of displaying items of service information included in the data broadcast in the receiver 100 to another one that the user likes, using the terminal 300. This operation will be next described with reference to a flowchart of FIG. 8. First, the user sets the terminal 300 to a remote control mode of the television receiver (step T1). When a new display format of data broadcast is set in the terminal 300, the user accesses the web server 210 in a predetermined manner (step T2 → step T3). In the accessed site of the television broadcast station 220, the user is able to check to see in what display format the items of service information included in the data broadcast can be displayed. The user selects a desired display format that, for example, always displays only items of service information including a prompt stock-price report, downloads the display format data (step T4), and then allocates the downloaded data to an appropriate key of the terminal 300 (step T5).

Then, when the user operates an appropriate key of the terminal 300 in a remote control mode (step T6), the display format data allocated to that key is transmitted from the infrared output port 310 to the television receiver 100 (step T7). The receiver 100 stores the received display format data on the format memory table and also displays a reproduction of the television broadcast at present under display in the new received display format instead of the old one used so far.

As described above, according to the second embodiment, when a desired display format is set in the digital broadcast receiver, the data can be downloaded from a network concerned and set easily without selecting desired items of service information while viewing the displayed picture severally.

Various modifications and changes may be made thereunto without departing from the broad spirit and scope of this invention. The above-described embodiments are intended to illustrate the present invention, not to limit the scope of the present invention. The scope of the present invention is shown by the attached claims rather than the embodiments.

## Claims

1. A digital television broadcast receiving system for receiving, from a television broadcast station (200), a broadcast signal representing a digital television broadcast that comprises video and voice information and a data broadcast that comprises service information, the system comprising:
a digital television receiver (100) that receives and displays the digital television broadcast;
**characterized by**
a mobile communication terminal (300) that comprises a communication unit that downloads display format data indicating items of service information from the data broadcast to be combined and positions and sizes where respective items of service information are to be displayed from a server (210) via a base station (220), and a transmission unit (310) that transmits the downloaded display format data to the digital television receiver (100); and
wherein the digital television receiver (100) displays the received video and service information in the display format indicated by the display format data transmitted by the transmission unit (310) of the mobile communication terminal (300).

2. A system according to claim 1, wherein the display format data downloaded from the sever (210) comprises a plurality of combinations of items of service information to be displayed and their display positions.

3. A system according to claims 1 or 2, wherein the mobile communication terminal (300) comprises a unit for allocating the downloaded display format data to any one of keys thereof.

4. A system according to any of claims 1 - 3, wherein the transmission unit (310) of the mobile communication terminal (300) comprises an infrared signal output unit.

5. A digital television broadcast system comprising:
a television broadcast station (200) that performs a digital television broadcast that comprises a data broadcast;
a server (210) that supplies a display format for the data broadcast; and
a digital television broadcast receiving system according to any of claims 1 to 4.

6. A method for receiving, from a television broadcast station (200), a broadcast signal representing a digital television broadcast that comprises video and voice information and a data broadcast that comprises service information, the method comprising the steps of:
receiving (S2) and displaying (S3) the digital television broadcast by a digital television receiver (100);
**characterized by**
downloading (T4) display format data indicating items of service information from the data broadcast to be combined and positions and sizes where respective items of service information are to be displayed from a server (210) by a mobile communication terminal (300) via a base station (220) ;
transmitting (T7) the downloaded display format data to the digital television receiver (100); and
wherein the step of displaying (S3) displays the received video and service information in the display format indicated by the transmitted display format data.

7. A method according to claim 6, wherein the display format data downloaded from the sever (210) comprises a plurality of combinations of items of service information to be displayed and their display positions.

8. A method according to claims 6 or 7, further comprising the step of allocating (T5) the downloaded display format data to any one of keys of the mobile communication terminal (300).

## Patentansprüche

1. Digitales Fernsehempfangssystem zum Empfangen eines Rundfunksignals von einer Fernsehstation (200), das eine digitale Fernsehausstrahlung, die Video- und Sprachinformationen beinhaltet, und eine Qatenausstrahlung, die Serviceinformationen beinhaltet, repräsentiert, wobei das System umfasst:
einen digitalen Fernsehempfänger (100), der die digitale Fernsehausstrahlung empfängt und anzeigt;
**gekennzeichnet durch**
ein mobiles Kommunikationsendgerät (300), das eine Kommunikationseinheit, die Anzeigeformatdaten von einem Server (210) über eine Basisstation (220) herunter lädt, die zu kombinierende Serviceinformationseinheiten aus der Datenausstrahlung und Positionen und Größen, an denen jeweilige Serviceinformationseinheiten anzuzeigen sind, angeben, und eine Übertragungseinheit (310), die die herunter geladenen Anzeigeformatdaten an den digitalen Fernsehempfänger (100) überträgt, umfasst; und
wobei der digitale Fernsehempfänger (100) die empfangenen Video- und Serviceinformationen in dem Anzeigeformat anzeigt, das von den Anzeigeformatdaten, die von der Übertragungseinheit (310) des mobilen Kommunikationsendgerätes (300) übertragen wurden, angegebenen wird.

2. System nach Anspruch 1, wobei die von dem Server (210) herunter geladenen Anzeigeformatdaten eine Vielzahl von Kombinationen von anzuzeigenden Serviceinformationseinheiten und ihre Anzeigepositionen umfassen.

3. System nach Anspruch 1 oder 2, wobei das mobile Kombinationsendgerät (300) eine Einheit zur Zuordnung der herunter geladenen Anzeigeformatdaten zu einer ihrer Tasten umfasst.

4. System nach einem der Ansprüche 1 bis 3, wobei die Übertragungseinheit (310) des mobilen Kommunikationsendgeräts (300) eine Ausgabeeinheit für Infrarotsignale umfasst.

5. Digitales Fernsehempfangssystem mit:
einer Fernsehstation (200), die eine digitale Fernsehausstrahlung durchführt, die eine Datenausstrahlung umfasst;
einem Server (210), der ein Anzeigeformat für die Datenausstrahlung liefert; und
ein digitales Fernsehempfangssystem nach einem der Ansprüche 1 bis 4.

6. Verfahren zum Empfangen eines Rundfunksignals von einer Fernsehstation (200), das eine digitale Fernsehausstrahlung, die Video- und Sprachinformationen beinhaltet, und eine Datenausstrahlung, die Serviceinformationen beinhaltet, repräsentiert, mit den Schritten:
Empfangen (S2) und Anzeigen (S3) der digitalen Fernsehausstrahlung durch einen digitalen Fernsehempfänger (100),
**gekennzeichnet durch**
Herunterladen (T4) von Anzeigeformatdaten, die zu kombinierende Serviceinformationseinheiten aus der Datenausstrahlung und Positionen und Größen, an denen jeweilige Serviceinformationseinheiten anzuzeigen sind, angeben, von einem Server (210) **durch** ein mobiles Kommunikationsendgerät (300) über eine Basisstation (220);
Übertragen (T7) der herunter geladenen Anzeigeformatdaten an den digitalen Fernsehempfänger (100); und
wobei der Anzeigeschritt (S3) die empfangenen Video- und Serviceinformationen in dem Anzeigeformat anzeigt, das von den übertragenen Anzeigeformatdaten angegeben wird.

7. Verfahren nach Anspruch 6, wobei die von dem Server (210) herunter geladenen Anzeigeformatdaten eine Vielzahl von anzuzeigenden Serviceinformationseinheiten und ihre Anzeigepositionen umfassen.

8. Verfahren nach Anspruch 6 oder 7, des Weiteren umfassend einen Schritt des Zuordnens der herunter geladenen Anzeigeformatdaten zu einer der Tasten des mobilen Kommunikationsendgeräts (300).

## Revendications

1. Système de réception d'émission de télévision numérique pour recevoir, d'une station d'émission de télévision (200), un signal d'émission représentant une émission de télévision numérique qui comprend des informations vidéo et vocales et une émission de données qui comprend des informations de service, le système comprenant :
un récepteur de télévision numérique (100) qui reçoit et affiche l'émission de télévision numérique ;
**caractérisé par**
un terminal de communication mobile (300) qui comprend une unité de communication qui télécharge à partir d'un serveur (210), via une station de base (220), des données de format d'affichage indiquant des articles d'informations de service provenant de l'émission de données à combiner et des positions et des tailles où des articles respectifs d'informations de service doivent être affichés et une unité de transmission (310) qui transmet les données de format d'affichage téléchargées au récepteur de télévision numérique (100) ; et
dans lequel le récepteur de télévision numérique (100) affiche les informations vidéo et de service reçues dans le format d'affichage indiqué par les données de format d'affichage transmises par l'unité de transmission (310) du terminal de communication mobile (300).

2. Système conformément à la revendication 1, dans lequel les données de format d'affichage téléchargées du serveur (210) comprennent plusieurs combinaisons d'articles d'informations de service à afficher et leurs positions d'affichage.

3. Système conformément à la revendication 1 ou 2, dans lequel le terminal de communication mobile (300) comprend une unité pour attribuer les données de format d'affichage téléchargées à l'une quelconque de clés appartenant audit terminal.

4. Système conformément à l'une quelconque des revendications 1 à 3, dans lequel l'unité de transmission (310) du terminal de communication mobile (300) comprend une unité de sortie de signal infrarouge.

5. Système d'émission de télévision numérique comprenant :
une station d'émission de télévision (200) qui met en oeuvre une émission de télévision numérique qui comprend une émission de données ;
un serveur (210) qui fournit un format d'affichage pour l'émission de données ; et
un système de réception d'émission de télévision numérique conformément à l'une quelconque des revendications 1 à 4.

6. Procédé pour recevoir, d'une station d'émission de télévision (200), un signal d'émission représentant une émission de télévision numérique qui comprend des informations vidéo et vocales et une émission de données qui comprend des informations de service, le procédé comprenant les étapes :
de réception (S2) et d'affichage (S3) de l'émission de télévision numérique par un récepteur de télévision numérique (100) ;
**caractérisé par :**
le téléchargement (T4) par un terminal de communication mobile (300) à partir d'un serveur (210), via une station de base (220), de données de format d'affichage indiquant des articles d'informations de service provenant de l'émission de données à combiner et des positions et des tailles où des articles respectifs d'informations de service doivent être affichés ;
la transmission (T7) des données de format d'affichage téléchargées au récepteur de télévision numérique (100) ; et
dans lequel l'étape d'affichage (S3) affiche les informations vidéo et de service reçues dans un format d'affichage indiqué par les données de format d'affichage transmises.

7. Procédé conformément à la revendication 6, dans lequel les données de format d'affichage téléchargées du serveur (210) comprennent plusieurs combinaisons d'articles d'informations de service à afficher et leurs positions d'affichage.

8. Procédé conformément à la revendication 6 ou 7 comprenant en outre l'étape d'attribution (T5) des données de format d'affichage téléchargées à l'une quelconque des clés du terminal de communication mobile (300).
